# EUROPÄISCHE PATENTSCHRIFT

(11) **EP 3 825 097 B1**
(45) Veröffentlichungstag und Bekanntmachung des Hinweises auf die Patenterteilung: **28.09.2022**
(21) Anmeldenummer: 20203186.0
(22) Anmeldetag: 21.10.2020
(51) Int. Cl.: B29C 49/42, B29C 49/78, B29C 49/06, B29C 49/12, B29C 49/36

(54) **VORRICHTUNG ZUM UMFORMEN VON KUNSTSTOFFVORFORMLINGEN ZU KUNSTSTOFFBEHÄLTNISSEN MIT PROPORTIONALVENTIL**
DEVICE FOR FORMING PLASTIC PREFORMS INTO PLASTIC CONTAINERS WITH PROPORTIONAL VALVE
DISPOSITIF DE FORMAGE DES PRÉFORMES EN MATIÈRE PLASTIQUE POUR OBTENIR DES RÉCIPIENTS EN MATIÈRE PLASTIQUE POURVU DE SOUPAPE PROPORTIONNELLE

(30) Priorität: 19.11.2019 DE 102019131188
(43) Veröffentlichungstag der Anmeldung: 26.05.2021
(73) Patentinhaber: Krones AG, 93073 Neutraubling (DE)
(72) Erfinder: Handschuh, Eduard, 93073 Neutraubling (DE); Voth, Klaus, 93073 Neutraubling (DE)
(74) Vertreter: Bittner, Bernhard

(56) Entgegenhaltungen:
- WO-A1-2014/068080
- DE-A1-102016 013 635
- US-A1- 2015 042 021

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit längerem bekannt. Dabei werden üblicherweise erwärmte Kunststoffvorformlinge mit einem fließfähigen, insbesondere einem gasförmigen Medium beaufschlagt, um so expandiert zu werden. In jüngerer Zeit ist man auch dazu übergegangen, Kunststoffvorformlinge unmittelbar mit einer Flüssigkeit, insbesondere mit einem abzufüllenden Produkt zu expandieren. Die vorliegende Erfindung kann insbesondere auf beide Ausgestaltungen Anwendung finden, bevorzugt jedoch auf die Verwendung eines gasförmigen Mediums wie insbesondere (Steril)luft.

Derartige Vorrichtungen und Verfahren aus dem Stand der Technik sind in den Patentschriften DE102016013635A1, US2015/042021A1 und WO2014/068080A1 beschrieben.

Üblicherweise werden dabei die Kunststoffvorformlinge mit unterschiedlichen Druckniveaus beaufschlagt. So ist es beispielsweise bekannt, dass die Kunststoffvorformlinge zunächst mit einem Vorblasdruck beaufschlagt werden, anschließend mit einem Zwischenblasdruck und schließlich auch noch mit einem Fertigblasdruck. Zum Schalten derartiger Drücke werden üblicherweise Zwei-Wege-Ventile eingesetzt. Diese können dabei eine vorangesetzte Luftdrossel aufweisen. Die jeweiligen Zeitpunkte, bei denen die Ventile geöffnet werden, können beispielsweise an die Bewegung einer sogenannten Reckstange, welche die Kunststoffvorformlinge in ihrer Längsrichtung dehnt, gekoppelt sein.

Diese Vorgehensweise hat sich zwar bewährt. Es tritt jedoch der Nachteil auf, dass während eines Vorblasvorgangs beispielsweise der Volumen- und/ oder Massenstrom in Abhängigkeit zu einer Reckstangenposition und auch umgekehrt die Parameter eines Reckantriebs, wie beispielsweise die Position, die Geschwindigkeit oder die Beschleunigung zur Volumenstromänderung nicht variiert werden können. Üblicherweise ist ein Bohrungsquerschnitt derartiger Ventile oder Drosseln fest eingestellt und kann auch nicht während eines Umformungsvorgangs verändert werden.

Der vorliegenden Erfindung liegt daher die Aufgabe zugrunde, derartige Vorrichtungen und Verfahren vielseitiger zu gestalten und gegebenenfalls auch während einer Produktion Eingriffe zu ermöglichen.

Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist wenigstens eine Umformungsstation auf, welche eine Blasformeinrichtung aufweist, innerhalb derer die Kunststoffvorformlinge durch Beaufschlagung mit einem fließfähigen Medium zu den Kunststoffbehältnissen umformbar sind. Weiterhin weist die Vorrichtung eine Beaufschlagungseinrichtung auf, welche die Kunststoffvorformlinge mit dem fließfähigen Medium beaufschlagt, sowie eine Dehneinrichtung, welche einen in die Kunststoffvorformlinge einführbaren Stangenkörper aufweist, um die Kunststoffvorformlinge wenigstens zeitweise während deren Umformungsvorgang in ihrer Längsrichtung zu dehnen, wobei die Dehneinrichtung eine Antriebseinrichtung zum Bewegen des Stangenkörpers aufweist sowie eine Steuerungseinrichtung zum Steuern der Antriebseinrichtung und wobei die Vorrichtung eine Ventilanordnung aufweist, welche die Beaufschlagung der Kunststoffvorformlinge mit dem fließfähigen Medium steuert. Weiterhin ermöglicht diese Ventilanordnung die Beaufschlagung der Kunststoffvorformlinge mit wenigstens zwei unterschiedlichen Druckniveaus und diese Ventilanordnung weist wenigstens ein Proportionalventil auf.

Erfindungsgemäß steuert die Steuerungseinrichtung die Antriebseinrichtung in Abhängigkeit von einer Ventilposition des Proportionalventils und/ oder die Ventilanordnung ermöglicht ein Recyceln des fließfähigen Mediums, wobei dieses Recyceln des fließfähigen Mediums unter Verwendung des Proportionalventils erfolgt.

Bei der ersten erfindungsgemäßen Ausgestaltung wird daher vorgeschlagen, dass der Reckstangenantrieb auch unter Verwendung von Daten und/oder Werten des Proportionalventils gesteuert und/oder geregelt wird, insbesondere von Daten und/oder Werten, welche für einen Öffnungs- und/ oder Schließzustand des Proportionalventils charakteristisch sind.

Durch diese Vorgehensweise kann der Verstreckungsgrad des Materials noch verfeinert werden. Weiterhin wäre es auch möglich, Charakteristika der Erwärmung der Kunststoffvorformlinge in den hier beschriebenen Prozess einzubeziehen, das heißt insbesondere auch in Abhängigkeit von dem Proportionalventil (bzw. einer Ventilstellung dieses Proportionalventils) zu gestalten.

Es wird daher insbesondere ein Regelbares Ventil vorgeschlagen, d.h. insbesondere ein Ventil, dessen Strömungsquerschnitt bzw. dessen Ventilstellung zwischen zwei Endstellungen, insbesondere einer vollständig geschlossenen und einer vollständig geöffneten Position einstellbar und/oder steuerbar ist.

Unter einem Recycling wird im Rahmen der vorliegenden Anmeldung verstanden, dass das fließfähige Medium, beispielsweise die Blasluft unter unterschiedlichen Drücken zur Verfügung gestellt wird und von einem höheren Druckniveau wieder in ein Reservoir mit einem geringeren Druckniveau zurückgeführt wird. Auf diese Weise kann Blasluft, insbesondere unter Druck stehende Blasluft, eingespart werden.

Es wird daher in einer Gestaltung vorgeschlagen, dass ein Ventilblock und insbesondere ein Hochdruckventilblock in einer Streckblasmaschine ein Proportionalventil für wenigstens einen Luftstrang, insbesondere für den später beschriebenen Luftstrang P1 aufweist. Dieser Ventilblock kann dabei bevorzugt die Luft in den P1-Strang recyceln.

Bei einer weiteren bevorzugten Ausführungsform ist ein Proportionalventil zum Schalten des geringsten Druckniveaus vorgesehen.

Insbesondere kann das oben erwähnte Proportionalventil die Luft in diesem Strang recyceln.

Bei einer bevorzugten Ausführungsform ist die besagte Umformungsstation an einem Träger angeordnet, insbesondere einem beweglichen Träger und insbesondere einem drehbaren Träger. Dabei kann es sich um ein sogenanntes Blasrad handeln.

Bei einer weiteren bevorzugten Ausführungsform handelt es sich bei den Antrieben für die Stangenkörper bzw. die sogenannten Reckstangen um motorische Antriebe und insbesondere um Elektromotore. Besonders bevorzugt sind Linearmotore vorgesehen. Im Stand der Technik erfolgen diese Reckstangen - Bewegungen üblicherweise mittels einer Kurvensteuerung bzw. mittels eines führungskurvengesteuerten Antriebs. In diesem Falle kann die Bewegung der einzelnen Reckstangen für die Station nicht variiert werden. Durch das Vorsehen von elektromotorischen Antrieben kann auch beim Vorsehen mehrerer Umformungsstationen der Antrieb der Reckstange jeder einzelnen Umformungsstation separat gesteuert werden.

Bei einer weiteren vorteilhaften Ausführungsform weist die Beaufschlagungseinrichtung eine Blasdüse auf, welche auf eine Mündung des Kunststoffvorformlings aufsetzbar ist.

Dabei ist es möglich, dass eine weitere Antriebseinrichtung vorgesehen ist, welche die Beaufschlagungseinrichtung auf die Kunststoffvorformlinge zustellt.

Bei einer weiteren bevorzugten Ausführungsform weist die Ventilanordnung mehrere Ventile auf. Diese mehreren Ventile können dabei dazu dienen, mehrere Druckstufen zu schalten. So kann beispielsweise ein erster Druck P1 vorgesehen sein, weiterhin ein Zwischenblasdruck Pi, weiterhin ein Fertigblasdruck P2. Ein weiteres Ventil kann vorgesehen sein, um Druckluft aus dem bereits expandierten Behältnis zu entlassen. Diese Druckstufe wird im Folgenden als Exhaust (Ex) bezeichnet.

Bei einer weiteren vorteilhaften Ausführungsform weist die Vorrichtung eine Zuführeinrichtung auf, um der Umformungsstation die Kunststoffvorformlinge zuzuführen und/oder eine Abführeinrichtung, welche die fertig geblasenen Behältnisse von den Umformungsstationen abführt. Bevorzugt sind auf dem oben genannten Träger mehrere derartige Umformungsstationen angeordnet.

Bei einer weiteren vorteilhaften Ausführungsform ist eine Steuerungseinrichtung vorgesehen, welche das oben erwähnte Proportionalventil steuert. Vorteilhaft steuert und insbesondere regelt dabei diese Steuerungseinrichtung das Proportionalventil und insbesondere dessen Stellung auf Basis einer Soll-Kurve. Innerhalb dieser Kurve wird festgelegt, wie die einzelnen Positionen des Proportionalventils angefahren werden können. Für die Anordnung bzw. die Ausgestaltung der unterschiedlichen Ventile sind mehrere Optionen denkbar.

So wäre es möglich, dass ein Proportionalventil für den Vorblasvorgang (den geringsten Druck P1) und ein zweites Ventil für das Fertigblasen mit dem Druck P2 des Behältnisses vorgesehen ist. Weiterhin kann ein Entlüftungsventil zum Entlassen der Luft in die Atmosphäre (nach Durchführung des Umformungsvorgangs bzw. Blasvorgangs) vorgesehen sein.

Bei einer weiteren Ausgestaltung weist die Ventilanordnung ein Proportionalventil für das Vorblasen auf, sowie ein zweites Ventil für das Zwischenblasen und ein drittes Ventil für das Fertigblasen. Daneben ist bevorzugt auch ein Entlüftungsventil zum Entlassen der Luft in die Atmosphäre vorgesehen. Diese drei letztgenannten Ventile sind dabei insbesondere keine Proportionalventile bzw. herkömmliche Ventile, beispielsweise Zwei-Wege-Ventile.

Bei einer weiteren Ausgestaltung wäre es auch möglich, dass die Ventilanordnung bzw. der Ventilblock ein Proportionalventil für das Vorblasen aufweist sowie ein zweites Proportionalventil für das Zwischenblasen und ein drittes Ventil für das Fertigblasen, wobei dieses dritte Ventil auch als herkömmliches Ventil ausgeführt sein kann.

Weiterhin ist auch hier bevorzugt ein Entlüftungsventil zum Entlassen der Luft in die Atmosphäre vorgesehen. Wie oben ausgeführt, wird, um den Verstreckungsgrad des Materials der Flasche zu optimieren, vorgeschlagen, den Antrieb für den stangenartigen Körper bzw. die Reckstange und das Proportionalventil abhängig voneinander anzusteuern und/ oder zu regeln.

Dazu kann besonders bevorzugt ein Regelkreis vorgesehen sein, der das besagte Proportionalventil und den Antrieb für die Reckstande miteinbezieht und/ oder in Abhängigkeit voneinander regelt.

Bei einer bevorzugten Ausführungsform können der Volumenstrom des Vorblasventils und der Hub des Stangenkörpers aufeinander abgestimmt werden und es können auch vorgegebene Sollkurven während eines Vorblasvorgangs abgefahren werden.

Alternativ oder zusätzlich wäre es auch möglich, den Regelkreis der Erwärmung der Kunststoffvorformlinge in einem Regelkreis des Reckens und/ oder des Blasens miteinzubinden.

Die vorliegende Erfindung bringt die Vorteile mit sich, dass das Material der Kunststoffvorformlinge besser bzw. günstiger verstreckt werden kann und bevorzugt auch definierter verteilt werden kann. Auf diese Weise kann insbesondere auch eine gewünschte Gewichtsverteilung erreicht werden.

Weiterhin ist eine flexible Einstellung der Vorblasparameter möglich. Daneben ist auch eine Schnellrezepteinstellung der Kunststoffflaschen ermöglicht.

Im Rahmen der zweiten erfindungsgemäßen Ausgestaltung ist es möglich, dass ein Recyceln des fließfähigen Mediums beispielsweise in einen Kanal mit einer geringeren Druckstufe auch über das Proportionalventil erfolgt. Dies ist insbesondere dann möglich, wenn das Proportionalventil auch zur Steuerung der ersten Druckstufe (P1) und/ oder der Druckstufe mit dem geringsten Druck verwendet wird.

Bei einer weiteren vorteilhaften Ausführungsform weist die Vorrichtung eine Erfassungseinrichtung zur Erfassung einer Position des stangenartigen Körpers auf. Dabei wird insbesondere eine Position des Stangenkörpers in Bezug auf den Kunststoffvorformling und/oder eine Position in der Längsrichtung des Stangenkörpers erfasst. Daneben ist es auch möglich, dass die Erfassungseinrichtung eine Bewegungsgeschwindigkeit des stangenartigen Körpers, insbesondere eine Bewegung in dessen Längsrichtung erfasst.

Daneben ist es auch möglich, dass die Erfassungseinrichtung eine Beschleunigung der Bewegung des Stangenkörpers erfasst. Bei einer bevorzugten Ausführungsform dient das besagte Proportionalventil zum Recyceln von Luft in dem unten genauer beschriebenen P1-Strang.

Durch die oben beschriebene Abstimmung zwischen dem Volumenstrom des Vorblasventils und dem Hub des stangenartigen Körpers können auch vorgegebene Sollkurven, insbesondere auch während des Vorblasens, abgefahren werden.

Unter einem Stangenkörper wird ein Körper verstanden, der sich in einer Vorzugsrichtung erstreckt, insbesondere in einer Längsrichtung. Daneben kann sich der Stangenkörper auch in Richtungen senkrecht zu der Längsrichtung erstrecken, allerdings jedoch deutlich geringfügiger als in der besagten Vorzugsrichtung.

Bei einer weiteren bevorzugten Ausführungsform weist die Vorrichtung ein erstes Reservoir zum Speichern des fließfähigen Mediums unter einem ersten Druck und ein zweites Reservoir zum Speichern des fließfähigen Mediums unter einem zweiten Druck, der insbesondere von dem ersten Druck abweicht, auf. So können sogenannte Ringkanäle vorgesehen sein, in denen Vorblasluft unter unterschiedlichen Drücken gespeichert wird. Ausgehend von diesen Reservoirs kann der Kunststoffvorformling mit unterschiedlichen Drücken beaufschlagt werden. Bevorzugt befinden sich diese Reservoirs auf dem Träger, an dem auch die Umformungsstationen angeordnet sind, wie insbesondere aber nicht ausschließlich dem Blasrad.

Weiterhin ist es auch möglich, dass in das Reservoir, das für den geringeren Druck dient, auch Druckluft recycelt wird. Unter einem Recyceln wird dabei insbesondere ein Rückführen von Druckluft in das Reservoir mit dem geringeren Druck verstanden. Bei einer bevorzugten Ausführungsform weist diese Ventilanordnung bzw. der Ventilblock mehrere Ventile auf. Dabei sind bevorzugt diese Ventile unterschiedlichen Druckstufen zugeordnet, wie etwa einem Vorblasdruck P1, einem Zwischenblasdruck Pi und einem Fertigblasdruck P2. Diese Ventile sind dabei bevorzugt unabhängig voneinander schaltbar.

Beim Expansionsvorgang erfolgt bevorzugt zunächst ein Vorblasen des Kunststoffvorformlings, anschließend ein Zwischenblasen und schließlich ein Fertigblasen. Schließlich kann noch über ein weiteres Ventil ein Entlasten des Kunststoffbehältnisses erfolgen bzw. die Luft aus dem Kunststoffbehältnis entlassen.

Bei einer weiteren bevorzugten Ausführungsform kann das oben erwähnte Proportionalventil auch als reines Schaltventil agieren. Dies bedeutet, dass das Proportionalventil auch zwischen zwei Stellungen, nämlich einer geschlossenen und einer geöffneten Stellung geschalten werden kann.

Bei einer weiteren bevorzugten Ausführungsform weist die Vorrichtung eine Ventilsteuerungseinrichtung auf, welche zum Steuern wenigstens einer der Ventileinrichtungen und insbesondere des Proportionalventils dient. Diese Steuerungseinrichtung kann dabei bevorzugt mit der Steuerungseinrichtung zum Steuern des Antriebs der Reckstange kommunizieren.

Bei einer weiteren bevorzugten Ausführungsform ist das Proportionalventil reinigbar und insbesondere auch mit einem Sterilisationsmedium, wie beispielsweise H₂O₂ reinigbar. Auf diese Weise ist auch ein steriler Betrieb der Umformungseinrichtung möglich. Bevorzugt ist das Proportionalventil zumindest teilweise aus Materialien hergestellt, welche unempfindlich gegenüber H₂O₂ sind.

Bei einer bevorzugten Ausführungsform kann die Vorrichtung einen Reinraum aufweisen, innerhalb dessen die Umformung der Kunststoffvorformlinge zu den Kunststoffbehältnissen stattfindet. Dieser Reinraum kann dabei mittels bezüglich einander beweglicher Wandungen gegenüber einer (unsterilen) Umgebung abgegrenzt werden.

Bei einer weiteren bevorzugten Ausführungsform weist das Proportionalventil eine Entlüftungsfunktion auf. Dabei kann in das Proportionalventil ein weiteres Ventilelement eingebaut sein, wie etwa eine Rückschlagventilfunktion oder auch ein weiteres schaltbares Ventil. Diese Entlüftungsfunktion kann dabei während des Blasvorgangs ein Entlüften des zu expandierenden Behältnisses bewirken.

Dabei ist es auch möglich, dass die Vorrichtung zwei oder auch mehrere proportionale Ventile aufweist.

Bei einer weiteren bevorzugten Ausführungsform ist das Proportionalventil um den Stangenkörper herum und/ oder um einen Blaskolben herum angeordnet. Dabei ist es möglich, dass oberhalb oder unterhalb des Proportionalventils ein weiteres Prozessventil angeordnet ist. Unter oberhalb und unterhalb wird dabei insbesondere eine Anordnung in einer vertikalen Richtung oder aber in einer Längsrichtung der Reckstange verstanden.

Allgemein ist bevorzugt das Proportionalventil in einer Reihe einer Vielzahl von Ventilen am nächsten zu der Beaufschlagungseinrichtung angeordnet.

Wie oben erwähnt, kann neben dem Proportionalventil noch ein weiteres Prozessventil vorgesehen sein. Daneben wäre es auch möglich, dass das Proportionalventil neben einem Blaskolben angeordnet ist.

Bei einer weiteren bevorzugten Ausführungsform kann die Umformungsstation stationär oder auf einem bewegbaren und insbesondere rotierenden Blasrad angeordnet sein.

Bei einer weiteren bevorzugten Ausführungsform sind der Antrieb für den stangenartigen Körper bzw. der Reckantrieb und das Proportionalventil bzw. dessen Antrieb abhängig voneinander bzw. agieren abhängig voneinander.

Wie oben erwähnt, fährt bei einer bevorzugten Ausführungsform das Proportionalventil eine Sollkurve ab. Dabei ist es insbesondere denkbar, dass bei einem Zwischen- und Fertigblasen der Behältnissolldruck in einem durch Grenzpunkte und/oder Grenzkurven bestimmten Bereich liegt.

Bei einer weiteren bevorzugten Ausführungsform weist also die Ventilanordnung insbesondere benachbart zu dem Proportionalventil noch wenigstens eine weitere Ventileinrichtung auf.

Die vorliegende Erfindung ist weiterhin auf ein Verfahren zum Umformen von Kunststoffvorformlingen zu Kunststoffbehältnissen mittels wenigstens einer Umformungsstation gerichtet, welche Umformungsstation eine Blasformeinrichtung aufweist, innerhalb derer die Kunststoffvorformlinge durch Beaufschlagung mit einem fließfähigen Medium zu den Kunststoffbehältnissen umgeformt werden und wobei eine Beaufschlagungseinrichtung die Kunststoffvorformlinge mit dem fließfähigen Medium beaufschlagt und einen in die Kunststoffvorformlinge einführbaren Stangenkörper aufweist und die Kunststoffvorformlinge wenigstens zeitweise während deren Umformungsvorgang in ihrer Längsrichtung dehnt, wobei mittels einer Antriebseinrichtung der Dehneinrichtung dieser Stangenkörper bewegt wird und eine Steuerungseinrichtung die Antriebseinrichtung steuert und wobei mittels einer Ventilanordnung die Beaufschlagung der Kunststoffvorformlinge mit dem fließfähigen Medium erfolgt, wobei diese Ventilanordnung die Beaufschlagung der Kunststoffvorformlinge mit wenigstens zwei unterschiedlichen Druckniveaus durchführt und diese Ventilanordnung wenigstens ein Proportionalventil aufweist.

Erfindungsgemäß steuert die Steuerungseinrichtung die Antriebseinrichtung in Abhängigkeit von einer Ventilposition des Proportionalventils und/ oder die Ventilanordnung ermöglicht ein Recyceln des fließfähigen Mediums, wobei dieses Recyceln des fließfähigen Mediums unter Verwendung des Proportionalventils erfolgt. Unter Verwendung des Proportionalventils wird verstanden, dass ein Strom des fließfähigen Mediums während des Recycelns wenigstens zeitweise auch über das Proportionalventil geführt wird.

Weitere Vorteile und Ausführungsformen ergeben sich aus den beigefügten Zeichnungen.

Darin zeigen:
- Fig. 1: eine Darstellung eines erfindungsgemäßen Ventilblocks;
- Fig. 2: eine weitere Darstellung einer Ausgestaltung eines Ventilblocks;
- Fig. 3: eine weitere Darstellung eines erfindungsgemäßen Ventilblocks;
- Fig. 4: eine weitere Darstellung eines erfindungsgemäßen Ventilblocks gemeinsam mit einem Kunststoffvorformling;
- Fig. 5: eine Draufsicht von oben auf den in Figur 4 gezeigten Ventilblock;
- Fig. 6: eine Darstellung zur Befestigung eines Ventilblocks;
- Fig. 7: eine weitere Darstellung zur Befestigung eines Ventilblocks;
- Fig. 8a, 8b: zwei Darstellungen zur Veranschaulichung eines erfindungsgemäßen Ventilblocks;
- Fig. 9a, 9b: zwei weitere Darstellungen zur Veranschaulichung eines Ventilblocks;
- Fig. 10: eine Seitenansicht eines Ventilblocks;
- Fig. 11: eine weitere Seitenansicht eines Ventilblocks;
- Fig. 12: eine Seitenansicht einer weiteren Ausgestaltung eines Ventilblocks;
- Fig. 13: eine Seitenansicht einer weiteren Ausgestaltung eines Ventilblocks;
- Fig. 14: eine weitere Seitenansicht einer Ausgestaltung eines Ventilblocks;
- Fig. 15: eine weitere Seitenansicht einer Ausgestaltung eines Ventilblocks;
- Fig. 16: eine weitere Seitenansicht einer Ausgestaltung eines Ventilblocks;
- Fig. 17: eine Darstellung zur Veranschaulichung der Steuerung einer erfindungsgemäßen Vorrichtung; und
- Fig. 18: eine schematische Darstellung einer erfindungsgemäßen Vorrichtung.

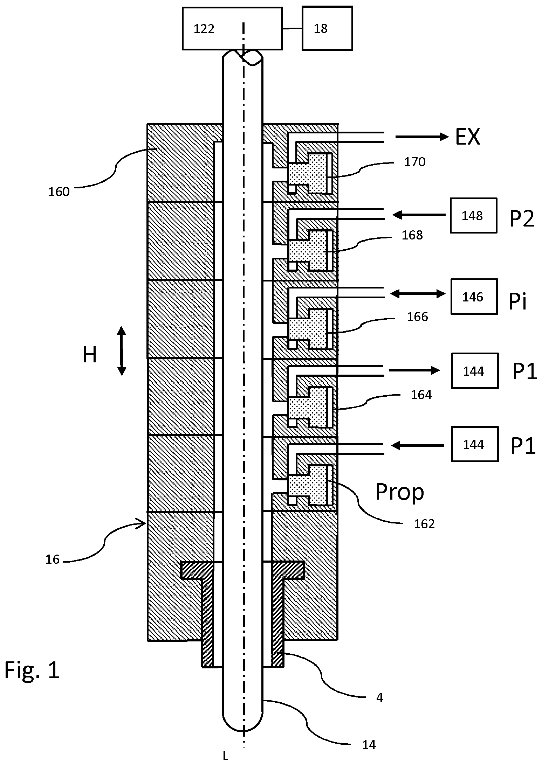

Figur 1 zeigt eine schematische Darstellung einer Ventilanordnung 16, im Folgenden auch als Ventilblock bezeichnet. Dieser Ventilblock ist dabei um eine Reckstange 14 herum angeordnet. Diese Reckstange bzw. dieser Stangenkörper wird in einen (in Fig. 1 nicht gezeigten) Kunststoffvorformling eingeführt, um ihn während dessen Expansion in seiner Längsrichtung zu dehnen. Zu diesem Zweck ist ein Antrieb 122 (nur schematisch dargestellt) vorgesehen, so wie auch eine Steuerungseinrichtung 18 zum Steuern dieses Antriebs. Das Bezugszeichen L kennzeichnet die Längsrichtung des Stangenkörpers und damit auch dessen Haupterstreckungsrichtung.

Das Bezugszeichen 4 kennzeichnet eine Beaufschlagungseinrichtung und insbesondere eine Blasdüse, welche an die Mündung des Kunststoffvorformlings anlegbar ist. Auch diese Beaufschlagungseinrichtung ist an die Mündung eines Kunststoffvorformlings anlegbar, um diesen zu expandieren. Insgesamt ist es dabei möglich, dass der gesamte Ventilblock 16 durch eine Bewegung in der Hubrichtung H auf den (nicht gezeigten) Kunststoffvorformling zustellbar ist, um diesen mit Blasdruck zu expandieren.

Der Ventilblock weist bei der hier gezeigten Ausgestaltung insgesamt 5 Ventileinrichtungen auf, nämlich die Ventile 162, 164, 166, 168 und 170. Dabei ist hier die Ventileinrichtung 162 als Proportionalventil und das Ventil 164 als Recyclingventil ausgestaltet.

Die einzelnen Ventile steuern dabei unterschiedliche Druckstufen. Dabei bezeichnet das Bezugszeichen P1 einen Vorblasdruck, das Bezugszeichen Pi einen Zwischenblasdruck und das Bezugszeichen P2 einen Fertigblasdruck. Der Druck Pi ist größer als der Druck P1 und der Druck P2 ist größer als der Druck Pi.

Das Bezugszeichen EX kennzeichnet einen Auslass (Exhaust), das heißt hier wird nach der Expansion der Kunststoffvorformlinge wieder verbleibende Druckluft aus diesem entlassen. Das Bezugszeichen 160 kennzeichnet das Ventilgehäuse bzw. das Gehäuse des Ventilblocks. Bei der hier gezeigten Ausgestaltung kennzeichnet damit das Bezugszeichen 166 das Zwischenblasventil, das Bezugszeichen 168 das Fertigblasdruckventil und das Bezugszeichen 170 das Auslassventil.

Das Proportionalventil ist hier direkt seitlich an der Reckstange bzw. dem Stangenkörper 14 angeordnet und hier in der Höhe oberhalb der Beaufschlagungseinrichtung bzw. Blasdüse 4. Die Bezugszeichen 144, 146 und 148 kennzeichnen grob schematisch Reservoirs, welche zum Speichern der Druckluft unter unterschiedlichen Drücken dienen. Diese Reservoirs können beispielsweise als Ringkanäle ausgeführt sein, welche bevorzugt ebenfalls an dem beweglichen Träger, an dem auch die Umformungsstationen angeordnet sind.

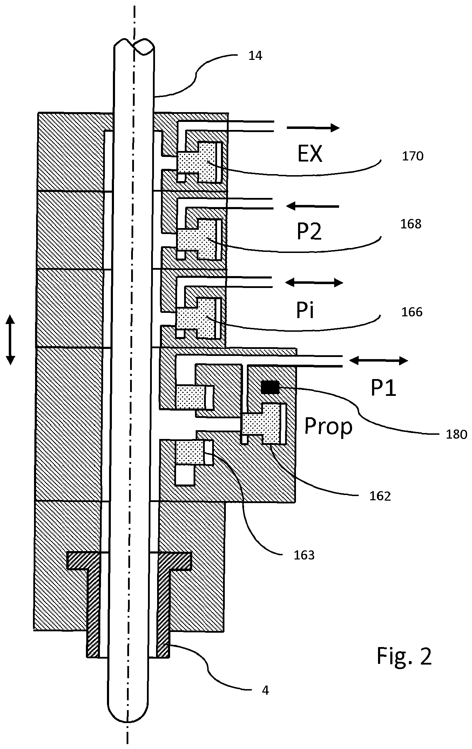

Figur 2 zeigt eine weitere Ausgestaltung eines erfindungsgemäßen Ventilblocks. Zur Vereinfachung sind hier der Reckstangenantrieb und die Steuerung nicht mehr dargestellt.

Auch hier sind wieder die unterschiedlichen zu schaltenden Drücke P1, Pi, P2 sowie der Auslass EX dargestellt. Das Bezugszeichen 162 kennzeichnet hier wiederum das Proportionalventil, welches zum Steuern der Zuführung der Druckstufe P1 dient. Weiterhin ist hier ein Ventil 163 vorgesehen, welches zum Druckluftrecyceln dient. Nach einem erfolgten Blasvorgang kann der hohe Druck aus der nunmehr expandierten Flasche mittels dieses Ventils rückgeführt werden in dasjenige Reservoir, welches die Druckluft unter dem Druck P1 vorhält.

Die einzelnen Druckluftreservoirs, die zum Vorhalten der Druckstufe P1, Pi und P2 dienen, sind in Figur 2 nicht dargestellt. Auch bei dieser Ausgestaltung ist das Proportionalventil 162 direkt seitlich des Stangenkörpers 14 angeordnet und in der Höhe oberhalb der Blasdüse und weist wie angemerkt ein zusätzliches Recyclingventil 163 auf, welches hier aber als Zwei-Wege-Ventil ausgeführt sein kann.

Das Bezugszeichen 180 kennzeichnet eine nur grob schematisch dargestellte Erfassungseinrichtung, welche eine Position des Proportionalventils 162 erfasst. Auf diese Weise kann unter Verwendung derartiger Messwerte, die sich auf das Proportionalventil beziehen, auch die Reckstangenbewegung gesteuert werden. Daneben kann das Proportionalventil 162 auch einen Antrieb aufweisen, der das Proportionalventil ansteuert.

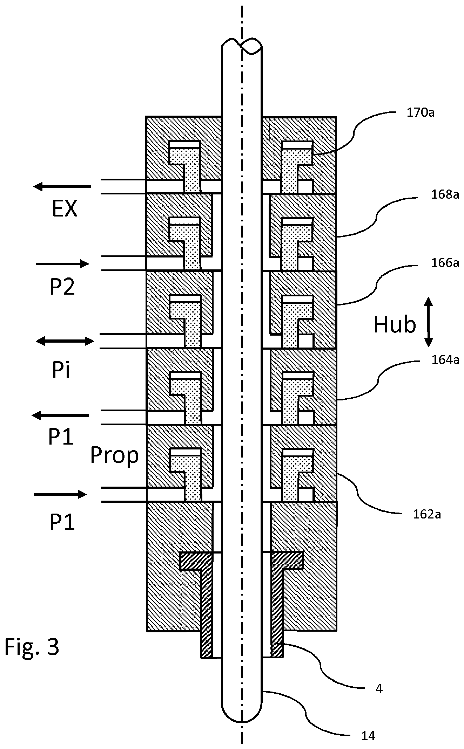

Figur 3 zeigt eine weitere Ausgestaltung einer erfindungsgemäßen Ventilanordnung bzw. eines erfindungsgemäßen Ventilblocks. Hierbei ist ebenfalls ein Proportionalventil 162a vorgesehen, sowie auch die weiteren Ventile 164a, 166a, 168a und 170a. Im Gegensatz zu den vorab gezeigten Figuren sind hier die einzelnen Ventile jeweils um die Reckstange 14 herum angelegt. Das Proportionalventil 162a ist auch hier direkt um die Reckstange angeordnet und in der Höhe oberhalb der Blasdüse 4. Das Bezugszeichen 164a dient hier als Recyclingventil und liegt hier oberhalb des Proportionalventils 162a. Dies bedeutet, dass hier ein Recyceln über das Ventil 164a erfolgen kann. Alternativ kann das Proportionalventil auch hier, ähnlich wie in Figur 2 gezeigt, als Recyclingventil dienen. Bei dieser Ausführungsform kann auf das Recyclingventil 164a verzichtet werden.

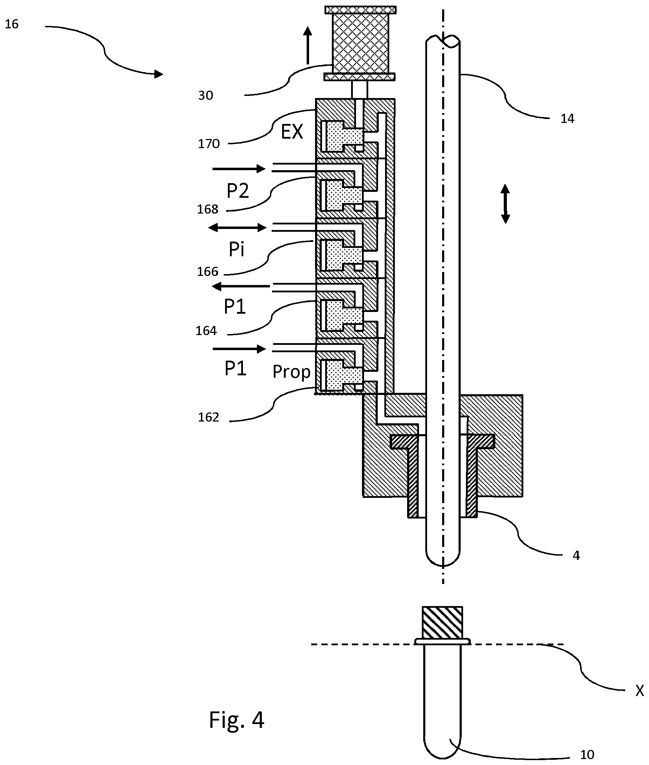

Figur 4 zeigt eine weitere Ausführungsform einer erfindungsgemäßen Ventilanordnung mit einem Kunststoffvorformling 10. Das Bezugszeichen X kennzeichnet dabei den Transportpfad, entlang dessen der Kunststoffvorformling während seines Umformvorgangs transportiert wird. Bei der in Figur 4 gezeigten Darstellung befindet sich die gesamte Hochdruckventileinheit bzw. der Ventilblock 16 seitlich neben dem Stangenkörper d.h. der Reckstange. Das Proportionalventil 162 ist auch hier wieder unmittelbar als erstes oberhalb der Blasdüse 4 angeordnet.

Auf diese Weise sind die durch das Proportionalventil gelangenden Luftströmungswege kürzer als die Strömungswege der jeweils anderen Ventile.

Das Bezugszeichen 30 bezieht sich auf einen Schalldämpfer, der an dem Auslassventil 170 (EX) angeordnet ist.

Alternativ kann das Proportionalventil auch hier, ähnlich wie in Figur 2 gezeigt, als Recyclingventil dienen. Bei dieser Ausführungsform kann auf das Recyclingventil 164 verzichtet werden.

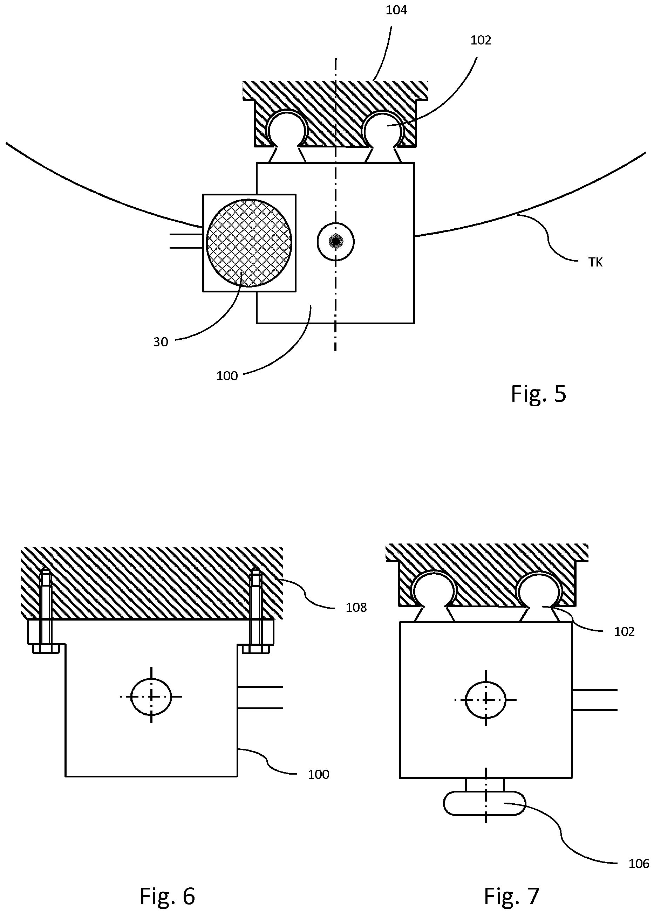

Figur 5 zeigt eine Ansicht von oben auf die in Figur 4 gezeigte Anordnung. Wie erwähnt, befindet sich das Proportionalventil seitlich neben der Reckstange. Wie erwähnt, wird der gesamte Ventilaufbau komplett und bevorzugt über eine Linearführung 102, 104 angehoben oder abgesenkt. In diesem Bereich können auch Linearmotoren und/oder pneumatische Antriebe vorgesehen sein. Das Bezugszeichen TK kennzeichnet den Teilkreis, entlang dessen die Kunststoffvorformlinge transportiert werden.

Figur 6 zeigt eine Ausgestaltung zur Veranschaulichung der Halterung der Reckstangenanordnung und/ oder des Ventilblocks 100 an einem Träger 108.

Figur 7 zeigt eine weitere Veranschaulichung, bei der zusätzlich eine Laufrolle 106 vorgesehen ist. Diese Laufrolle 106 läuft gegenüber einer (nicht gezeigten) Führungskurve ab und auf diese Weise wird die Bewegung der Ventilanordnung in der Hubrichtung gesteuert.

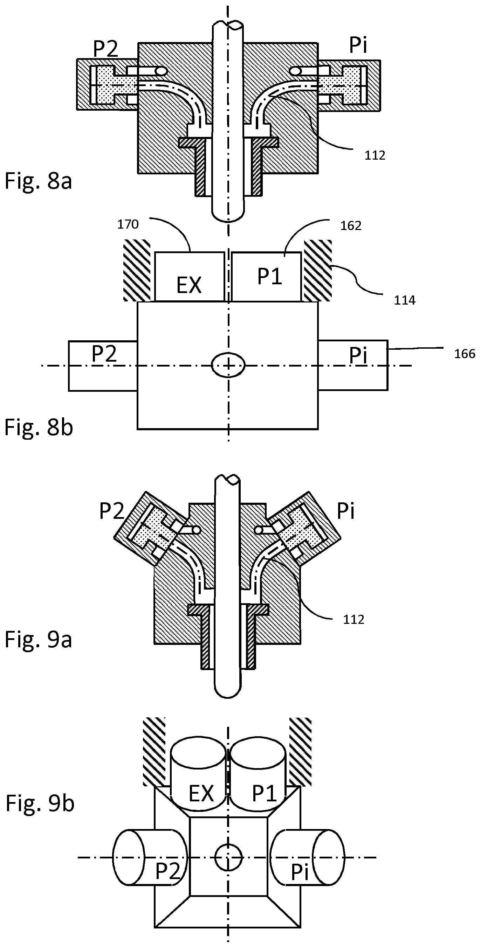

Die Figuren 8a und 8b zeigen zwei Ansichten eines erfindungsgemäßen Ventilblocks in einer weiteren Ausgestaltung. Bei dieser Ausgestaltung sind die unterschiedlichen Ventile an unterschiedlichen Positionen in Umfangsrichtung um die Reckstange bzw. den Stangenkörper verteilt. Auf diese Weise ist es möglich, auch für mehrere Ventile die Strömungswege zu verkürzen. Bei der hier gezeigten Ausführungsform ist das Proportionalventil auf der Rückseite des Ventilblocks angeordnet. Das Bezugszeichen 114 kennzeichnet eine Ventilblockhalterung. In Figur 8b sind im Inneren des Ventilblocks Luftkanäle 112 dargestellt, welche die Ventile mit der Beaufschlagungseinrichtung strömungstechnisch verbinden.

Die Figuren 9a und 9b zeigen eine weitere Ausgestaltung des erfindungsgemäßen Ventilblocks. Hier sind die Ventile schräg an dem Ventilgehäuse angesetzt. Dies bedeutet, dass sich die Ventilkolben dieser Ventile in einer Richtung bewegen, die schräg zu der Längsrichtung des Stangenkörpers verläuft. Auch in der in Figur 9b gezeigten Darstellung erkennt man diese schräge Anordnung. Genauer sind die einzelnen Ventile derart angeordnet, dass sie einen optimalen Strömungskanal im Inneren aufweisen, der beispielsweise in einem Winkel von 45° verlaufen kann.

Bevorzugt verlaufen die Bewegungsrichtungen dieser Ventileinrichtung ein einem Winkel gegenüber der Längsrichtung des Stangenkörpers, der zwischen 30° und 60°, bevorzugt zwischen 40° und 50° liegt.

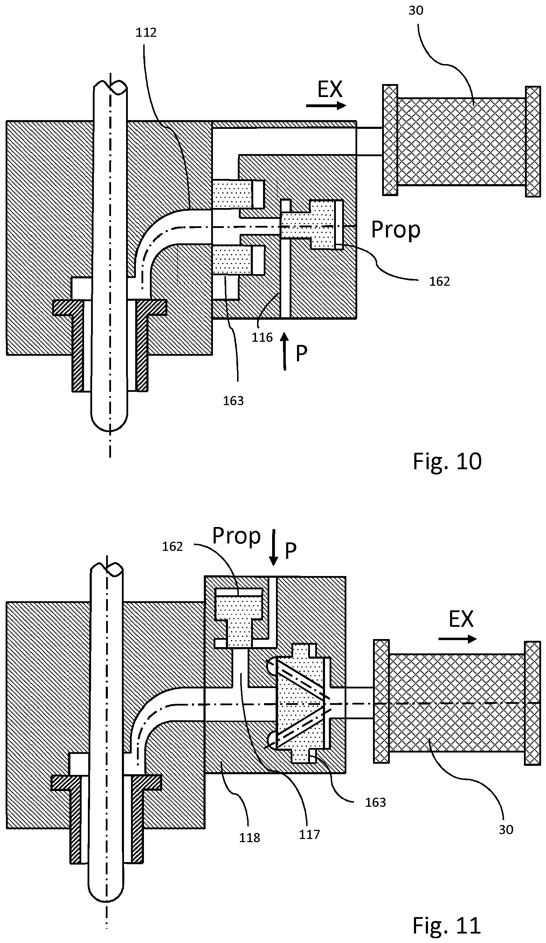

Figur 10 zeigt eine weitere Darstellung einer erfindungsgemäßen Ventilanordnung. Hier ist wieder ein Schalldämpfer 30 gezeigt, sowie auch ein Luftkanal 112. Das Bezugszeichen 116 kennzeichnet einen Luftkanal, der das Proportionalventil 162 versorgt. Das Bezugszeichen 163 kennzeichnet eine Ventileinrichtung, die zur Entlüftung dient, wobei hier die Entlüftung bevorzugt auch über das Proportionalventil 162 erfolgen kann. Dieses Entlüftungsventil ist hier um den Luftkanal 116 herum angeordnet.

Fig. 11 zeigt eine weitere Ausführungsform der vorliegenden Erfindung. Auch bei dieser Ausgestaltung ist ein Proportionalventil 162 sowie auch ein Entlüftungsventil 163 vorgesehen. Bei dieser Ausgestaltung zweigt ein Luftkanal 117 in Richtung des Proportionalventils 162 und des Entlüftungsventils 163 ab. Das Bezugszeichen 118 kennzeichnet ein Ventilgehäuse.

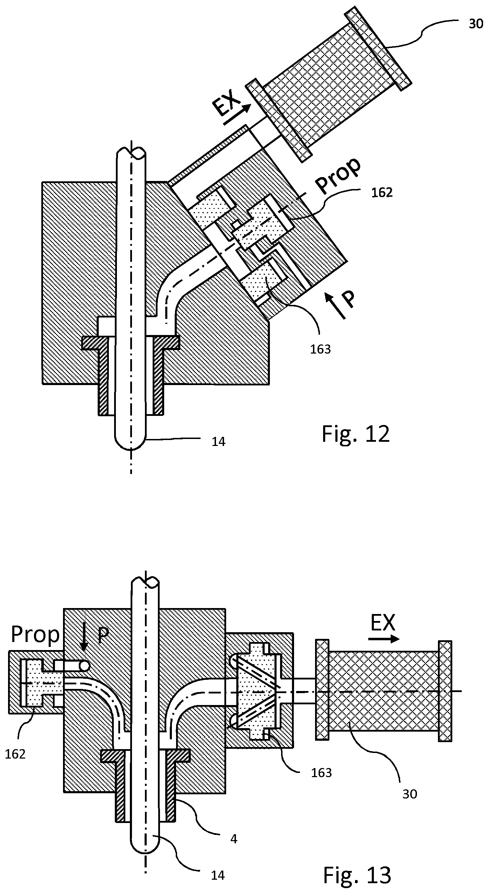

Fig. 12 zeigt eine Ausgestaltung, bei der das Proportionalventil 162 und das Entlüftungsventil 163 schräg an der Ventilanordnung bzw. deren Gehäuse angeordnet sind.

Bei der in Fig. 13 gezeigten Ausgestaltung sind ebenfalls ein Proportionalventil 162 sowie ein Entlüftungsventil 163 vorgesehen. Diese sind in Umfangsrichtung des Stangenkörpers 14 an unterschiedlichen Positionen angeordnet und insbesondere einander gegenüberliegend.

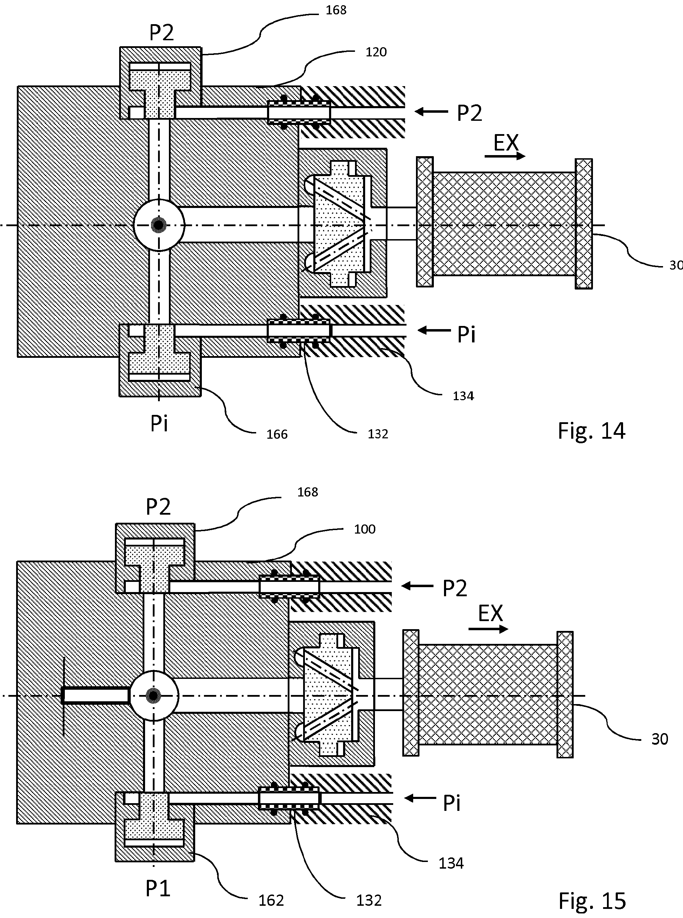

Fig. 14 zeigt eine Draufsicht einer weiteren Ausführungsform einer erfindungsgemäßen Ventileinrichtung. Hier liegen die Ventileinrichtungen 166 und 168 einander gegenüber. Das Bezugszeichen 132 bezieht sich auf eine Befestigungseinrichtung um eine Druckzuführungsleitung 134 an dem Ventilblock anzuschließen.

Bei der in Fig. 15 gezeigten Ausgestaltung sind das Proportionalventil 162 und die Ventileinrichtung 168 zum Schalten bzw. Steuern des Drucks P2 einander gegenüber angeordnet.

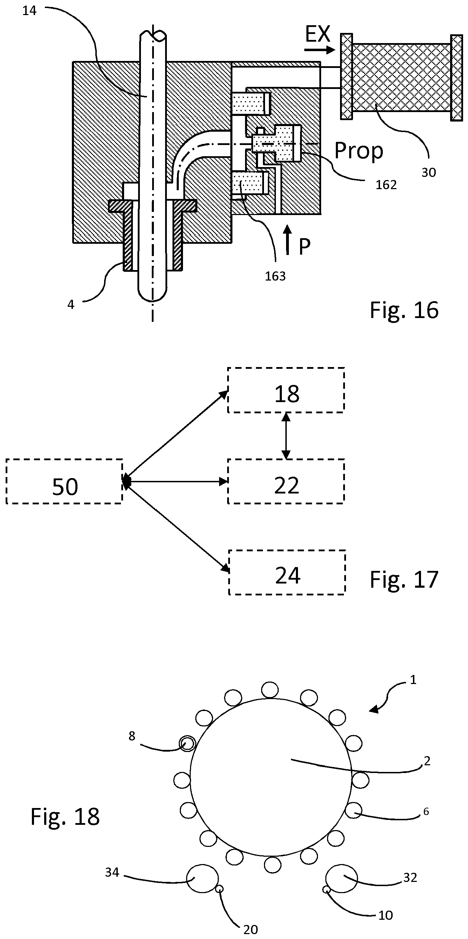

Fig. 16 zeigt eine weitere Ausgestaltung, bei der das Proportionalventil 162 und das Entlüftungsventil 163 seitlich neben dem Stangenkörper 14 angeordnet sind und über einen gekrümmten Luftkanal mit der Beaufschlagungseinrichtung 4 verbunden sind.

Fig. 17 zeigt grob schematisch die Steuerungs- bzw. Regelungsprozesse für eine erfindungsgemäße Vorrichtung. Dabei ist bevorzugt eine Prozessteuerungseinrichtung 50 vorgesehen, welche die gesamte Umformungsstation steuert. Diese wiederum kommuniziert mit der Steuerungseinrichtung 18, welche den Antrieb für die Reckstange steuert. Daneben kann diese Prozesssteuerungseinrichtung 50 auch mit der Ventilsteuerungseinrichtung 22 kommunizieren, welche wiederum die einzelnen Ventile und insbesondere das Proportionalventil 162 steuert. Alternativ können auch die Steuerungseinrichtung 18 sowie die Ventilsteuerungseinrichtung untereinander kommunizieren.

Daneben kann, wie in Fig. 17 gezeigt, die Prozesssteuerungseinrichtung 50 auch mit der Steuerungseinrichtung 24 zum Steuern einer Heizeinrichtung zum Erwärmen der Kunststoffvorformlinge.

Fig. 18 zeigt eine schematische Darstellung einer Vorrichtung zum Umformen von Kunststoffvorformlingen 10 zu Kunststoffbehältnissen und insbesondere Kunststoffflaschen 20. Dabei bezieht sich das Bezugszeichen 32 auf eine Zuführeinrichtung wie einen Transportstern, der der Vorrichtung Kunststoffvorformlinge 10 zuführt. Das Bezugszeichen 34 bezieht sich auf eine weitere Transporteinrichtung, welche die gefertigten bzw. umgeformten Behältnisse 20 von der Vorrichtung 1 abführt.

Die Vorrichtung 1 weist weiterhin einen drehbaren Träger 2 auf, an dem eine Vielzahl von Umformungsstationen 6 angeordnet ist. Jede dieser Umformungsstationen 6 weist eine Blasformeinrichtung 8 auf, innerhalb derer die Kunststoffvorformlinge umgeformt werden.

### Bezugszeichenliste

- 1: Vorrichtung
- 2: Träger
- 4: Beaufschlagungseinrichtung, Blasdüse
- 6: Umformungsstation
- 8: Blasformeinrichtung
- 10: Kunststoffvorformling
- 14: Reckstange
- 16: Ventilblock
- 18: Steuerungseinrichtung
- 20: Behältnis
- 30: Schalldämpfer
- 32: Zuführeinrichtung
- 34: Abführeinrichtung
- 100: Ventilblock
- 102: Linearführung
- 104: Linearführung
- 106: Laufrolle
- 108: Träger
- 112: Luftkanäle
- 112: Luftkanal
- 114: Ventilblockhalterung
- 116: Luftkanal
- 117: Luftkanal
- 118: Ventilgehäuse
- 132: Befestigungseinrichtung
- 134: Druckzuführungsleitung
- 144: Reservoir für Druck P1
- 146: Reservoir für Druck Pi
- 148: Reservoir für Druck P2
- 122: Antrieb
- 160: Ventilgehäuse
- 162: Ventil
- 162a: Proportionalventil
- 163: Ventil
- 164: Ventil
- 164a: Recyclingventil
- 166: Ventil
- 166a: Ventil
- 168: Ventil
- 168a: Ventil
- 170: Ventil
- 170a: Ventil
- 180: Erfassungseinrichtung
- EX: Auslass (Exhaust)
- L: Längsrichtung des Stangenkörpers
- P1: Vorblasdruck
- P2: Fertigblasdruck
- Pi: Zwischenblasdruck
- X: Transportpfad
- TK: Teilkreis

## Patentansprüche

1. Vorrichtung (1) zum Umformen von Kunststoffvorformlingen (10) zu Kunststoffbehältnissen (20) mit wenigstens einer Umformungsstation (6), welche eine Blasformeinrichtung (8) aufweist, innerhalb derer die Kunststoffvorformlinge (10) durch Beaufschlagung mit einem fließfähigen Medium zu den Kunststoffbehältnissen (20) umformbar sind, mit einer Beaufschlagungseinrichtung (4), welche die Kunststoffvorformlinge (10) mit dem fließfähigen Medium beaufschlagt und mit einer Dehneinrichtung (12), welche einen in die Kunststoffvorformlinge einführbaren Stangenkörper (14) aufweist, um die Kunststoffvorformlinge wenigstens zeitweise während deren Umformungsvorgang in ihrer Längsrichtung (L) zu dehnen, wobei die Dehneinrichtung (12) eine Antriebseinrichtung (122) zum Bewegen des Stangenkörpers (14) aufweist sowie eine Steuerungseinrichtung (18) zum Steuern der Antriebseinrichtung (122) und wobei die Vorrichtung (1) eine Ventilanordnung (16) aufweist, welche die Beaufschlagung der Kunststoffvorformlinge mit dem fließfähigen Medium steuert, wobei diese Ventilanordnung die Beaufschlagung der Kunststoffvorformlinge mit wenigstens zwei unterschiedlichen Druckniveaus (p1, p2) ermöglicht und diese Ventilanordnung (16) wenigstens ein Proportionalventil (162) aufweist,
**dadurch gekennzeichnet, dass**
die Steuerungseinrichtung (18) die Antriebseinrichtung (122) in Abhängigkeit von einer Ventilposition des Proportionalventils (162) steuert und/ oder die Ventilanordnung (16) ein Recyclen des fließfähigen Mediums ermöglicht, wobei dieses Recyclen des fließfähigen Mediums unter Verwendung des Proportionalventils (162) erfolgt.

2. Vorrichtung (1) nach Anspruch 1,
**dadurch gekennzeichnet, dass**
die Vorrichtung (1) eine Erfassungseinrichtung zur Erfassung einer Position des stangenartigen Körpers aufweist.

3. Vorrichtung (1) nach wenigstens einem der vorangegangenen Ansprüche,
**dadurch gekennzeichnet, dass**
die Vorrichtung (1) ein erstes Reservoir (32) zum Speichern des fließfähigen Mediums unter einem ersten Druck und ein zweites Reservoir (34) zum Speichern des fließfähigen Mediums unter einem zweiten Druck aufweist.

4. Vorrichtung (1) nach wenigstens einem der vorangegangenen Ansprüche,
**dadurch gekennzeichnet, dass**
das Proportionalventil zum Zuführen eines ersten, niedrigeren Druckes in die Kunststoffvorformlinge dient.

5. Vorrichtung (1) nach wenigstens einem der vorangegangenen Ansprüche,
**dadurch gekennzeichnet, dass**
das Proportionalventil auch als Schaltventil agieren kann.

6. Vorrichtung (1) nach wenigstens einem der vorangegangenen Ansprüche,
**dadurch gekennzeichnet, dass**
das Proportionalventil eine Entlüftungsfunktion aufweist.

7. Vorrichtung (1) nach wenigstens einem der vorangegangenen Ansprüche,
**dadurch gekennzeichnet, dass**
das Proportionalventil (162) um den Stangenkörper (14) und/oder um einen Blaskolben (24) herum angeordnet ist.

8. Vorrichtung (1) nach wenigstens einem der vorangegangenen Ansprüche,
**dadurch gekennzeichnet, dass**
benachbart zu dem Proportionalventil (162) eine weitere Ventileinrichtung vorgesehen ist.

9. Verfahren zum Umformen von Kunststoffvorformlingen (10) zu Kunststoffbehältnissen (20) mit wenigstens einer Umformungsstation (6), welche eine Blasformeinrichtung (8) aufweist, innerhalb derer die Kunststoffvorformlinge (10) durch Beaufschlagung mit einem fließfähigen Medium zu den Kunststoffbehältnissen (20) umgeformt werden, und wobei eine Beaufschlagungseinrichtung (4), die Kunststoffvorformlinge (10) mit dem fließfähigen Medium beaufschlagt und eine Dehneinrichtung (12), welche einen in die Kunststoffvorformlinge einführbaren Stangenkörper (14) aufweist, die Kunststoffvorformlinge wenigstens zeitweise während deren Umformungsvorgang in ihrer Längsrichtung (L) dehnt, wobei mittels einer Antriebseinrichtung (122) der Dehneinrichtung (12) der Stangenkörper (14) bewegt wird und eine Steuerungseinrichtung (18) die Antriebseinrichtung (122) steuert und wobei mittels einer Ventilanordnung (16) die Beaufschlagung der Kunststoffvorformlinge mit dem fließfähigen Medium erfolgt, wobei diese Ventilanordnung die Beaufschlagung der Kunststoffvorformlinge mit wenigstens zwei unterschiedlichen Druckniveaus (p1, p2) durchführt und diese Ventilanordnung (16) wenigstens ein Proportionalventil (162) aufweist, **dadurch gekennzeichnet, dass**
die Steuerungseinrichtung (18) die Antriebseinrichtung in Abhängigkeit von einer Ventilposition des Proportionalventil steuert und/ oder die Ventilanordnung ein Recyclen des fließfähigen Mediums durchführt, wobei dieses Recyclen des fließfähigen Mediums unter Verwendung des Proportionalventils erfolgt.

## Claims

1. Apparatus (1) for transforming plastic preforms (10) into plastic containers (20) having at least one transforming station (6) which has a blow molding device (8), within which the plastic preforms (10) are transformable into the plastic containers (20) by being acted upon with a flowable medium, having an application device (4) which applies the flowable medium to the plastic preforms (10) and having a stretching device (12) which has a rod-like body (14) which is able to be introduced into the plastic preforms, in order to stretch the plastic preforms at least temporarily during their transforming process in the longitudinal direction (L) thereof, wherein the stretching device (12) has a drive device (122) for moving the rod-like body (14) as well as a control device (18) for controlling the drive device (122) and wherein the apparatus (1) has a valve arrangement (16) which controls the application of the plastic preforms with a flowable medium, wherein this valve arrangement enables the application of the plastic preforms with at least two different pressure levels (p1, p2) and this valve arrangement (16) has at least one proportional valve (162),
**characterized in that**
the control device (18) controls the drive device (122) as a function of a valve position of the proportional valve (162) and/or the valve arrangement (16) enables a recycling of the flowable medium, wherein this recycling of the flowable medium takes place by using the proportional valve (162).

2. Apparatus (1) according to claim 1,
**characterized in that**
the apparatus (1) has a detection device for detecting a position of the rod-like body.

3. Apparatus (1) according to at least one of the preceding claims, **characterized in that**
the apparatus (1) has a first reservoir (32) for storing the flowable medium under a first pressure and a second reservoir (34) for storing the flowable medium under a second pressure.

4. Apparatus (1) according to at least one of the preceding claims, **characterized in that**
the proportional valve is used for feeding a first, lower pressure into the plastic preforms.

5. Apparatus (1) according to at least one of the preceding claims, **characterized in that**
the proportional valve can also act as a switching valve.

6. Apparatus (1) according to at least one of the preceding claims, **characterized in that**
the proportional valve has a ventilation function.

7. Apparatus (1) according to at least one of the preceding claims, **characterized in that**
the proportional valve (162) is arranged around the rod-like body (14) and/or around a blow piston (24).

8. Apparatus (1) according to at least one of the preceding claims, **characterized in that**
adjacent to the proportional valve (162) there is a further valve device provided.

9. Method for transforming plastic preforms (10) into plastic containers (20) having at least one transforming device (6) which has a blow molding device (8), within which the plastic preforms (10) are transformed into the plastic containers (20) by being acted upon with a flowable medium wherein an application device (4) applies the flowable medium to the plastic preforms (10) and a stretching device (12) which has a rod-like body (14) which is able to be introduced into the plastic preforms which stretches the plastic preforms at least temporarily during their transforming process in the longitudinal direction (L) thereof, wherein by means of a drive device (122) of the stretching device (12) the rod-like body (14) is moved and a control device (18) controls the drive device (122) and wherein by means of a valve arrangement (16) the application of the plastic preforms with a flowable medium takes place, wherein this valve arrangement performs the application of the plastic preforms with at least two different pressure levels (p1, p2) and this valve arrangement (16) has at least one proportional valve (162),
**characterized in that**
the control device (18) controls the drive device as a function of a valve position of the proportional valve and/or the valve arrangement performs a recycling of the flowable medium wherein this recycling of the flowable medium takes place by using the proportional valve.

## Revendications

1. Dispositif (1) de façonnage de préformes en matière plastique (10) en récipients en matière plastique (20) avec au moins un poste de façonnage (6), lequel présente un système de moulage par soufflage (8), à l'intérieur duquel les préformes en matière plastique (10) peuvent être façonnées en les récipients en matière plastique (20) par l'action exercée par un agent pouvant couler, avec un système d'application (4), lequel soumet les préformes en matière plastique (10) à l'action de l'agent pouvant couler, et avec un système d'étirage (12), lequel présente un corps de barre (14) pouvant être introduit dans les préformes en matière plastique pour étirer les préformes en matière plastique au moins par intermittence au cours de leur opération de façonnage dans leur sens longitudinal (L), dans lequel le système d'étirage (12) présente un système d'entraînement (122) pour déplacer le corps de barre (14), ainsi qu'un système de commande (18) pour commander le système d'entraînement (122) et dans lequel le dispositif (1) présente un ensemble formant soupape (16), lequel commande l'action exercée sur les préformes en matière plastique par l'agent pouvant couler, dans lequel ledit ensemble formant soupape permet de soumettre les préformes en matière plastique à l'action d'au moins deux niveaux de pression (p1, p2) différents et ledit ensemble formant soupape (16) présente au moins une soupape proportionnelle (162),
**caractérisé en ce que**
le système de commande (18) commande le système d'entraînement (122) en fonction d'une position de soupape de la soupape proportionnelle (162) et/ou l'ensemble formant soupape (16) permet un recyclage de l'agent pouvant couler, dans lequel ledit recyclage de l'agent pouvant couler est effectué en utilisant la soupape proportionnelle (162).

2. Dispositif (1) selon la revendication 1,
**caractérisé en ce que**
le dispositif (1) présente un système de détection pour détecter une position du corps de type barre.

3. Dispositif (1) selon au moins l'une quelconque des revendications précédentes,
**caractérisé en ce que**
le dispositif (1) présente un premier réservoir (32) pour stocker l'agent pouvant couler à une première pression et un deuxième réservoir (34) pour stocker l'agent pouvant couler à une deuxième pression.

4. Dispositif (1) selon au moins l'une quelconque des revendications précédentes,
**caractérisé en ce que**
la soupape proportionnelle sert à amener une première pression plus basse dans les préformes en matière plastique.

5. Dispositif (1) selon au moins l'une quelconque des revendications précédentes,
**caractérisé en ce que**
la soupape proportionnelle peut agir également en tant que soupape de commutation.

6. Dispositif (1) selon au moins l'une quelconque des revendications précédentes,
**caractérisé en ce que**
la soupape proportionnelle présente une fonction de ventilation.

7. Dispositif (1) selon au moins l'une quelconque des revendications précédentes,
**caractérisé en ce que**
la soupape proportionnelle (162) est disposée tout autour du corps de barre (14) et/ou tout autour d'un piston de soufflage (24).

8. Dispositif (1) selon au moins l'une quelconque des revendications précédentes,
**caractérisé en ce que**
un autre système de soupape est prévu de manière adjacente à la soupape proportionnelle (162).

9. Procédé de façonnage de préformes en matière plastique (10) en des récipients en matière plastique (20) avec au moins un poste de façonnage (6), lequel présente un système de moulage par soufflage (8), à l'intérieur duquel les préformes en matière plastique (10) sont façonnées en les récipients en matière plastique (20) par l'action exercée par l'agent pouvant couler, et dans lequel un système d'application (4) soumet les préformes en matière plastique (10) à l'action de l'agent pouvant couler et un système d'étirage (12), lequel présente un corps de barre (14) pouvant être introduit dans les préformes en matière plastique, étire les préformes en matière plastique au moins par intermittence au cours de leur opération de façonnage dans leur sens longitudinal (L), dans lequel le corps de barre (14) est déplacé au moyen d'un système d'entraînement (122) du système d'étirage (12) et un système de commande (18) commande le système d'entraînement (122), et dans lequel l'action exercée sur les préformes en matière plastique par l'agent pouvant couler est effectuée au moyen d'un ensemble formant soupape (16), dans lequel ledit ensemble formant soupape met en œuvre l'action exercée sur les préformes en matière plastique par au moins deux niveaux de pression (p1, p2) différents et ledit ensemble formant soupape (16) présente au moins une soupape proportionnelle (162), **caractérisé en ce que**
le système de commande (18) commande le système d'entraînement en fonction d'une position de soupape de la soupape proportionnelle et/ou l'ensemble formant soupape met en œuvre un recyclage de l'agent pouvant couler, dans lequel ledit recyclage de l'agent pouvant couler est effectué en utilisant la soupape proportionnelle.
